# EUROPEAN PATENT APPLICATION

(11) **EP 3 101 742 A1**
(43) Date of publication of application: **07.12.2016**
(21) Application number: 16172729.2
(22) Date of filing: 02.06.2016
(51) Int. Cl.: H01S 3/106, H01S 3/113, H01S 3/16, H01S 3/0941

(54) **CONTROLLING EMISSION OF AN OPTICAL PULSE FROM A LASER**

(30) Priority: 05.06.2015 GB 201509780
(71) Applicant: Thales Holdings UK Plc, Addlestone, Surrey KT15 2NX (GB)
(72) Inventor: LEE, Stephen, Glasgow, G51 4BZ (GB); ALEXANDER, William, Glasgow, G51 4BZ (GB); COOK, Trevor, Glasgow, G51 4BZ (GB)
(74) Representative: Grant, David Michael

(57) **Abstract**

A method for use in controlling emission of an optical pulse from a laser comprises pumping a gain medium (10) of a laser at a rate which is limited so that free-running passive Q-switching of the laser is prevented regardless of a duration of pumping of the gain medium. The method further comprises triggering a saturable absorber (12) of the laser so as to reduce a laser cavity loss below a laser cavity gain and cause an optical pulse to be emitted from the laser at a desired emission time. Such a method may provide for the reduction of pulse-to-pulse timing jitter, the control of energy of the emitted optical pulse and/or for the suppression of the emission of multiple optical pulses that may otherwise occur for free-running passive Q-switching of the laser for sufficient gain medium pumping rates.

## Description

### FIELD

Embodiments described herein relate to the control of emission of an optical pulse from a laser and, in particular, though not exclusively, to the control of emission of an optical pulse from a passively Q-switched laser for target designator and/or laser range finder applications.

### BACKGROUND

Q-switching is a well known technique for generating high-energy, short duration optical pulses from a laser. A Q-switched laser generally includes a gain medium for amplifying light and a switch device arranged within a laser cavity. The switch device is switchable between a low Q state in which feedback of light through the gain medium is prevented and a high Q state in which feedback of light is permitted. Whilst the switch device remains or is held in the low Q state, the gain medium is excited or pumped and stores energy until the switch device is changed, or changes, from the low Q state to the high Q state, thereby resulting in the emission of a high-energy, short duration optical pulse.

For example, active Q-switching generally relies upon the use of an externally controlled Q-switch such as a variable attenuator or modulator for switching optical loss in the laser cavity. Active Q-switches generally produce reliable pulses but often require the use of relatively high voltages and relatively fast voltage switching rates. Active Q-switches may also be relatively complex, relatively large and may be relatively expensive.

Passive Q-switching is also well known for generating optical pulses from a laser. A passively Q-switched laser generally includes a gain medium, a saturable absorber and an optical feedback arrangement which defines a laser cavity including the gain medium and the saturable absorber. The gain medium is pumped and the gain in the laser cavity grows until the gain exceeds the losses from the laser cavity and stimulated emission occurs. This may result in rapid bleaching of the saturable absorber and a rapid rise in optical intensity within the laser cavity. The rise in optical intensity depletes the cavity gain until the cavity gain falls below the cavity loss and stimulated emission ceases. Such variation in the cavity gain and cavity loss may result in the emission of a passively Q-switched optical pulse from the laser. If pumping continues, the laser may periodically emit passively Q-switched optical pulses with a repetition rate that depends on the dynamics of the cavity gain and the cavity loss. Such passively Q-switched operation of a laser may be referred to as "free-running" passive Q-switching.

During passive Q-switching the optical intensity at which the saturable absorber bleaches is generally fixed and, as a result, the gain stored in the laser cavity at the instant of Q-switching and the energy output in a single Q-switched optical pulse is generally fixed and cannot be varied. If the pump rate is increased, additional or secondary Q-switched optical pulses may be generated. For example, when pumping pulsed, if the pump rate and/or pulse duration is too great, multiple Q-switched optical pulses may be generated per pump pulse.

### BRIEF DESCRIPTION OF THE DRAWINGS

Embodiments will now be described by way of non-limiting example only with reference to the drawings of which:
- Figure 1: is a schematic of a laser apparatus shown in operation;
- Figure 2(a): illustrates the temporal variation of a photon flux (proportional to optical output energy) in the laser apparatus of Figure 1 when a gain medium of the laser apparatus is pumped continuously and in the absence of any triggering of a saturable absorber of the laser apparatus;
- Figure 2(b): illustrates the temporal variation of population inversion density (proportional to gain) in the gain medium of the laser apparatus of Figure 1 when the gain medium is pumped continuously in the absence of any triggering of the saturable absorber;
- Figure 2(c): illustrates the temporal variation of population density in a ground state (proportional to loss) in the saturable absorber of the laser apparatus of Figure 1 when the gain medium is pumped continuously in the absence of any triggering of the saturable absorber;
- Figure 3(a): illustrates the temporal variation of a photon flux (proportional to optical output energy) in the laser apparatus of Figure 1 when a gain medium of the laser apparatus is pumped continuously and the saturable absorber is optically triggering at a time of 860 µs;
- Figure 3(b): illustrates the temporal variation of population inversion density (proportional to gain) in the gain medium of the laser apparatus of Figure 1 when the gain medium is pumped continuously and the saturable absorber is optically triggering at a time of 860 µs; and
- Figure 3(c): illustrates the temporal variation of population density in the ground state (proportional to loss) in the saturable absorber of the laser apparatus of Figure 1 when the gain medium is pumped continuously and the saturable absorber is optically triggering at a time of 860 µs.

### DETAILED DESCRIPTION OF THE DRAWINGS

It should be understood that one or more of the features of any of the following aspects or embodiments may apply alone or in any combination in relation to any of the other aspects or embodiments.

One of ordinary skill in the art will understand that the term "free-running" passive Q-switching is used herein to describe passive Q-switched operation of a laser when no external stimulus is used to bleach a saturable absorber of the laser.

A first aspect or embodiment described herein provides a method for use in controlling emission of an optical pulse from a laser, the method comprising:
pumping a gain medium of a laser at a rate which is limited so as to prevent free-running passive Q-switching of the laser regardless of a duration of pumping of the gain medium; and
triggering a saturable absorber of the laser so as to reduce a laser cavity loss below a laser cavity gain and cause an optical pulse to be emitted from the laser at a desired emission time.

The method may comprise:
pumping the gain medium at a rate which is less than a rate of pumping of the gain medium required for passive Q-switching of the laser when no external stimulus is used to bleach the saturable absorber; and
using an external stimulus to bleach the saturable absorber to reduce a laser cavity loss below a laser cavity gain and cause an optical pulse to be emitted from the laser at a desired emission time.The method may comprise limiting the rate of pumping of the gain medium to a maximum rate of pumping of the gain medium which is less than the rate of pumping of the gain medium required for free-running passive Q-switching of the laser regardless of a duration of pumping of the laser gain medium.

The method may comprise limiting the rate of pumping of the gain medium to a maximum rate of pumping of the gain medium which is less than the rate of pumping of the gain medium required for passive Q-switching of the laser when no external stimulus is used to bleach the saturable absorber.

The method may comprise selecting the rate of pumping of the gain medium between zero and the maximum rate of pumping. Such a method may be used for controlling the energy of the emitted laser pulse from zero up to a maximum emitted pulse energy which is dictated by the maximum rate of pumping.

The method may comprise pumping the gain medium continuously.

The method may comprise verifying that an optical output emitted from the laser is substantially time invariant. The method may comprise detecting the optical output from the laser for this purpose.

The method may comprise selecting the rate of pumping of the gain medium by:
pumping the gain medium continuously when no external stimulus is used to bleach the saturable absorber; and
verifying that an optical output emitted from the laser is substantially time invariant when no external stimulus is used to bleach the saturable absorber.

The method may comprise triggering the saturable absorber repetitively. The method may comprise using an external stimulus to bleach the saturable absorber repetitively.

The method may comprise triggering the saturable absorber periodically. The method may comprise using the external stimulus to bleach the saturable absorber periodically. This may reduce pulse-to-pulse timing jitter compared with the pulse-to-pulse timing jitter associated with free-running passive Q-switched operation of the laser.

The steps of pumping the gain medium and triggering the saturable absorber may be performed sequentially or may at least partially overlap in time.

The method may comprise pumping the gain medium for a limited time period.

The method may comprise pumping the gain medium pulsed. The method may prevent the emission of multiple passive Q-switched pulses per pump pulse.

The method may comprise pumping the gain medium repetitively.

The method may comprise pumping the gain medium periodically.

The method may comprise optically pumping the gain medium.

The method may comprise using a semiconductor device to pump the gain medium.

The method may comprise using a laser diode to pump the gain medium.

The method may comprise using a flash-lamp to pump the gain medium.

The method may comprise electrically pumping the gain medium.

The method may comprise optically triggering the saturable absorber. The method may comprise using an optical external stimulus to bleach the saturable absorber. For example, the method may comprise using light from an optical trigger source to bleach the saturable absorber.

The method may comprise using light from a solid state optical trigger source to bleach the saturable absorber.

The method may comprise using light from a semiconductor optical trigger source such as a light emitting diode (LED) or a semiconductor laser to bleach the saturable absorber.

The method may comprise injecting or coupling light from an optical trigger source into the saturable absorber.

The method may comprise injecting or coupling light into an active layer of the saturable absorber.

The method may comprise injecting or coupling light into an end or a side of the saturable absorber.

The method may comprise electrically triggering the saturable absorber. The method may comprise using an electrical external stimulus to bleach the saturable absorber. For example, the method may comprise using an electrical signal such as a voltage signal and/or a current signal or the like from an electrical trigger source to bleach the saturable absorber.

The electrical signal may comprise an electrical voltage and/or an electrical current.

The method may comprise applying a bias to the saturable absorber or varying a bias applied to the saturable absorber so as to trigger the saturable absorber.

The method may comprise directing the optical pulse emitted from the laser at a target.

The method may comprise detecting light reflected from the target for the designation of the target and/or for determining a range from the laser to the target.

A second aspect or embodiment described herein provides a laser apparatus comprising:
a gain medium;
a saturable absorber;
a pump for pumping the gain medium; and
a trigger source for triggering the saturable absorber,
wherein the pump has a maximum pump rate at which free-running passive Q-switching of the laser apparatus is prevented regardless of a length of time that the pump is used to pump the gain medium, and the trigger source is configured to trigger the saturable absorber so as to reduce a laser cavity loss below a laser cavity gain and cause the emission of an optical pulse from the laser apparatus at a desired emission time.

The trigger source may be configured to bleach the saturable absorber.

The pump may have a maximum pump rate which is less than a rate of pumping of the gain medium required for passive Q-switching of the laser apparatus when no external stimulus is used to bleach the saturable absorber.

The trigger source may be configured to provide an external stimulus to bleach the saturable absorber to reduce a laser cavity loss below a laser cavity gain and cause the emission of an optical pulse from the laser apparatus at a desired emission time.

The laser apparatus may be configured to produce passively Q-switched optical pulses having pulse energies of at least 1 mJ, of at least 10 mJ or of at least 100 mJ.

The laser apparatus may be configured to produce passively Q-switched optical pulses having durations of between 1 and 100 ns, of between 10 and 50 ns or of around 20 ns.

The laser apparatus may be configured to produce passively Q-switched optical pulses at repetition rates of between 1 Hz and 1000 Hz, at repetition rates of between 10 Hz and 100 Hz, or at repetition rates substantially of 20 Hz.

The gain medium may comprise a solid state material.

The gain medium may comprise yttrium aluminium garnet (YAG).

The gain medium may comprise neodymium (Nd).

The gain medium may comprise neodymium-doped yttrium aluminium garnet (Nd: YAG).

The pump may comprise an optical pump.

The optical pump may comprise a laser diode or a flashlamp.

The optical pump may be optically coupled to an end and/or to a side of the gain medium.

The laser apparatus may comprise one or more optical elements for coupling the optical pump to the gain medium.

The laser apparatus may comprise one or more lenses, mirrors or the like for coupling the optical pump to the gain medium.

The gain medium may comprise a semiconductor material.

The pump may comprise an electrical pump.

The pump may comprise a current source.

The saturable absorber may comprise a solid state material.

The saturable absorber may comprise yttrium aluminium garnet (YAG).

The saturable absorber may comprise chromium (Cr).

The saturable absorber may comprise chromium-doped yttrium aluminium garnet (Cr:YAG).

The saturable absorber may comprise spinel doped with cobalt.

The saturable absorber may comprise a semiconductor material.

The trigger source may comprise an optical trigger source.

The optical trigger source may be optically coupled to an end and/or to a side of the saturable absorber.

The trigger source may comprise an electrical trigger source.

The electrical trigger source may comprise an electrical voltage and/or an electrical current source.

The electrical trigger source may be electrically coupled to the saturable absorber.

The laser apparatus may comprise one or more electrically conductive connections between the electrical trigger source and the saturable absorber.

A third aspect or embodiment described herein provides a method for use in configuring a laser, the method comprising:
pumping a gain medium of a laser at a rate above that required for free-running passive Q-switching of the laser;
confirming free-running passive Q-switching of the laser; and then
reducing the rate of pumping of the gain medium until free-running passive Q-switching of the laser ceases regardless of a duration of pumping of the gain medium.

The laser may comprise a saturable absorber, and the method may comprise:
pumping the gain medium at a rate above that required for passive Q-switching of the laser when no external stimulus is used to bleach the saturable absorber;
confirming passive Q-switching of the laser when no external stimulus is used to bleach the saturable absorber; and then
reducing the rate of pumping of the gain medium until passive Q-switching of the laser ceases when no external stimulus is used to bleach the saturable absorber.Such a method may be used during manufacture of a laser, for example, during factory setting or factory configuration of the laser prior to arrival and/or installation at a point of use. Additionally or alternatively, such a method may be used to reconfigure a laser, for example, after arrival and/or installation at a point of use, or after use of the laser.

The method may comprise monitoring an optical output from the laser.

The method may comprise detecting the optical output from the laser.

The method may comprise detecting a pulsed temporal variation in the optical output from the laser.

The method may comprise checking that the detected temporal variation in the optical output from the laser is consistent with free-running passive Q-switching of the laser. The method may comprise checking that the detected pulsed temporal variation in the optical output from the laser is consistent with passive Q-switching of the laser when no external stimulus is used to bleach the saturable absorber.

The method may comprise measuring the energy of optical pulses emitted by the laser.

The method may comprise determining the duration of optical pulses emitted by the laser.

The method may comprise determining the power, for example, the peak power of optical pulses emitted by the laser.

The method may comprise determining the length of time between successive optical pulses emitted by the laser.

A fourth aspect or embodiment described herein provides a laser target designator comprising:
a gain medium;
a saturable absorber;
a pump for pumping the gain medium; and
a trigger source for triggering the saturable absorber,
wherein the pump has a maximum pump rate at which free-running passive Q-switching of the laser target designator is prevented regardless of a length of time that the pump is used to pump the gain medium, and the trigger source is configured to trigger the saturable absorber so as to reduce a laser cavity loss below a laser cavity gain and cause the emission of an optical pulse from the laser target designator at a desired emission time.

The trigger source may be configured to bleach the saturable absorber.

The pump may have a maximum pump rate which is less than a rate of pumping of the gain medium required for passive Q-switching of the laser apparatus when no external stimulus is used to bleach the saturable absorber.

The trigger source may be configured to provide an external stimulus to bleach the saturable absorber to reduce a laser cavity loss below a laser cavity gain and cause the emission of an optical pulse from the laser apparatus at a desired emission time.

A fifth aspect or embodiment described herein provides a laser range finder comprising:
a gain medium;
a saturable absorber;
a pump for pumping the gain medium; and
a trigger source for triggering the saturable absorber,
wherein the pump has a maximum pump rate at which free-running passive Q-switching of the laser range finder is prevented regardless of a length of time that the pump is used to pump the gain medium, and the trigger source is configured to trigger the saturable absorber so as to reduce a laser cavity loss below a laser cavity gain and cause the emission of an optical pulse from the laser range finder at a desired emission time.

The trigger source may be configured to bleach the saturable absorber.

The pump may have a maximum pump rate which is less than a rate of pumping of the gain medium required for passive Q-switching of the laser apparatus when no external stimulus is used to bleach the saturable absorber.

The trigger source may be configured to provide an external stimulus to bleach the saturable absorber to reduce a laser cavity loss below a laser cavity gain and cause the emission of an optical pulse from the laser apparatus at a desired emission time.

A sixth aspect or embodiment described herein provides a method for use in controlling emission of an optical pulse from a laser comprising a gain medium and a saturable absorber, the method comprising:
pumping the gain medium at a rate which is less than a rate of pumping of the gain medium required for passive Q-switching of the laser when no external stimulus is used to bleach the saturable absorber; and
using an external stimulus to bleach the saturable absorber to reduce a laser cavity loss below a laser cavity gain and cause an optical pulse to be emitted from the laser at a desired emission time.

A seventh aspect or embodiment described herein provides a laser apparatus comprising:
a gain medium;
a saturable absorber;
a pump for pumping the gain medium; and
a trigger source for bleaching the saturable absorber,
wherein the pump has a maximum pump rate which is less than a rate of pumping of the gain medium required for passive Q-switching of the laser apparatus when no external stimulus is used to bleach the saturable absorber, and
wherein the trigger source is configured to provide an external stimulus to bleach the saturable absorber to reduce a laser cavity loss below a laser cavity gain and cause the emission of an optical pulse from the laser apparatus at a desired emission time.

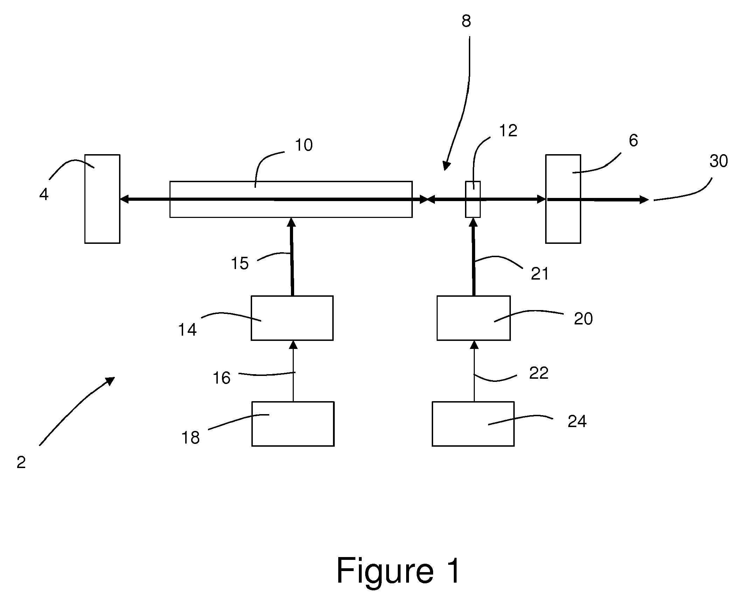

An eighth aspect or embodiment described herein provides a method for use in configuring a laser comprising a gain medium and a saturable absorber, the method comprising:
pumping the gain medium at a rate above that required for passive Q-switching of the laser when no external stimulus is used to bleach the saturable absorber;
confirming passive Q-switching of the laser when no external stimulus is used to bleach the saturable absorber; and then
reducing the rate of pumping of the gain medium until passive Q-switching of the laser ceases when no external stimulus is used to bleach the saturable absorber.Referring initially to Figure 1 there is shown a laser apparatus generally designated 2 which may form part of a laser target designator and/or a laser range finder apparatus. The laser apparatus 2 includes a highly reflecting mirror 4 and a partially reflecting output coupling mirror 6. The highly reflecting mirror 4 and an output coupling mirror 6 define a laser cavity 8 therebetween. The laser apparatus 2 includes a neodymium-doped yttrium aluminium garnet (Nd: YAG) gain medium 10 and a chromium-doped yttrium aluminium garnet (Cr:YAG) saturable absorber 12.

The laser apparatus 2 further includes a laser diode pump 14 which is optically coupled to a side of the gain medium 10 via one or more optical elements such as one or more lenses, mirrors and/or the like (not shown) as represented by arrow 15. The laser apparatus 2 further includes a laser diode pump current driver 18 which is configured to supply an electrical current 16 to the laser diode pump 14. The current driver 18 is configured for driving the laser diode pump 14 with a continuous direct current. For example, the current driver 18 may be capable of driving the laser diode pump 14 with a continuous direct current having a predetermined or user-selectable magnitude. The current driver 18 may also be configurable to drive the laser diode pump 14 with a time-varying current such as a pulsed electrical current. The current driver 18 may, for example, be capable of varying the duration and/or magnitude of any current pulses provided to the laser diode pump 14. The current driver 18 may be capable of superposing a time-varying current onto a direct current.

The laser apparatus 2 includes a light emitting diode (LED) 20 which is optically coupled to a side of the saturable absorber 12 via one or more optical elements such as one or more lenses, mirrors and/or the like (not shown) as represented by arrow 21. The laser apparatus 2 further includes an LED current driver 24 which is configured to supply an electrical current 22 to the LED 20. The LED current driver 24 is configured for driving the LED 20 with a time-varying current such as a pulsed electrical current. The LED current driver 24 may, for example, be capable of varying the duration and/or magnitude of any current pulses provided to the LED 20.

In use, the laser diode pump current driver 18 supplies a continuous direct current 16 to the laser diode pump 14 causing the laser diode pump 14 to emit light continuously. Light form the laser diode pump 14 is optically coupled into the gain medium 10 so as to pump the gain medium 10 continuously. Put another way, the laser diode pump 14 pumps the gain medium 10 "continuous wave" or CW. Pumping the gain medium 10 in this way provides a population inversion in the gain medium 10 for the amplification of any light transmitted from the highly reflecting mirror 4 to the output coupling mirror 6 though the gain medium 10. A magnitude of the continuous direct current 16 supplied by the laser diode pump current driver 18 is restricted so as to limit the rate of optical pumping of the gain medium 10 and thereby prevent free-running passive Q-switching of the laser apparatus 2. The current driver 18 is configured so as to limit the magnitude of the continuous direct current 16 that may be supplied from the current driver 18 to the laser diode pump 14 to a maximum level or value below the level required for free-running passive Q-switching of the laser apparatus 2.

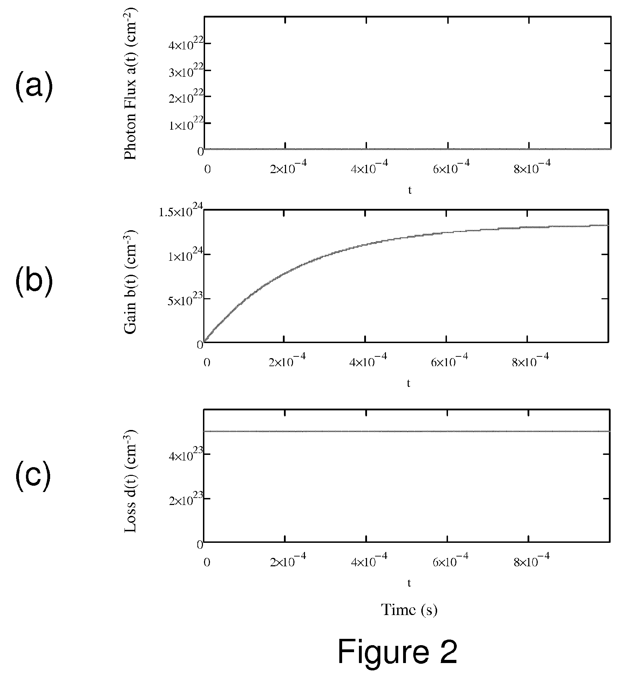

Figure 2(b) illustrates the temporal evolution of the population inversion b(t) in the gain medium 10 as a function of time t in the absence of any triggering of the saturable absorber 12. Time t = 0 corresponds to the instant when the laser diode pump current driver 18 first supplies the continuous direct current 16 to the laser diode pump 14. As shown in Figure 2(b), the population inversion b(t) initially grows from time t = 0 until the population inversion b(t) reaches a steady-state value which is determined by a dynamic equilibrium between the rate of pumping of the gain medium 10 and the rate of spontaneous emission or fluorescence within the gain medium 10. In the absence of any triggering of the saturable absorber 12, the population density d(t) in a ground state of the saturable absorber 12 is relatively high as illustrated in Figure 2(c). As a consequence of the relative magnitudes of the population inversion b(t) in the gain medium 10 and the population density d(t) in a ground state of the saturable absorber 12, a round-trip loss in the laser cavity 8 exceeds a round-trip gain and the photon flux is limited to a relatively negligible level a(t) shown in Figure 2(a) which corresponds to the photon flux arising as a result of the spontaneous emission in the gain medium 10. Consequently, the light emitted from the output coupling mirror 6 is also limited to spontaneous emission at a relatively negligible photon flux level.

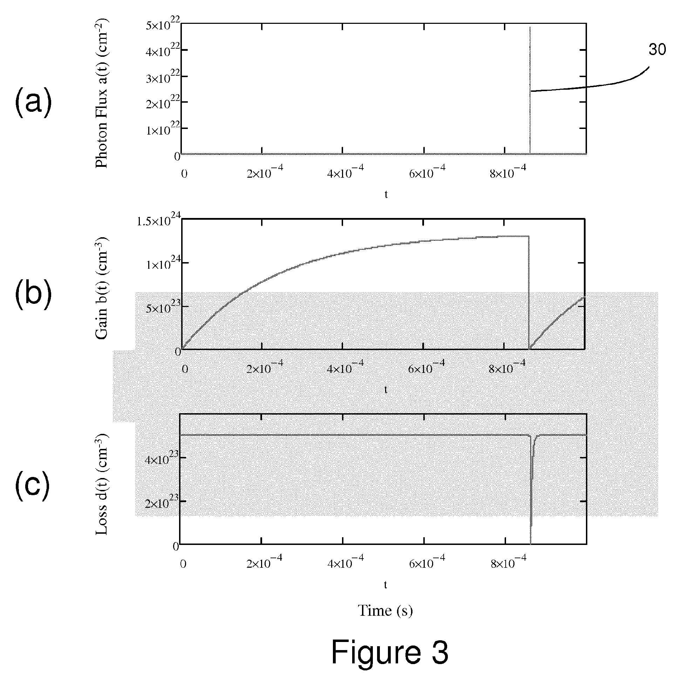

With reference to Figures 3(a) - 3(c), when a Q-switched pulse is required, for example around time t = 860 µs, the LED current driver 24 is triggered to supply a pulse of electrical current to the LED 20. The supply of the electrical current to the LED 20 causes the LED 20 to emit an optical pulse 30 which is, in turn, optically coupled to the saturable absorber 12. As illustrated in Figure 3(c), this reduces the population density d(t) in the ground state of the saturable absorber 12 thereby reducing the round-trip loss in the laser cavity 8 below the round-trip gain and leading to an abrupt or dramatic increase in the photon flux a(t) as shown in Figure 3(a) at time t = 860 µs. The increase in photon flux a(t) rapidly reinforces the bleaching or saturation of the saturable absorber 12 leading to an abrupt or dramatic dip in population density d(t) in the ground state of the saturable absorber 12 at time t = 860 µs as shown in Figure 3(c). The increase in photon flux a(t) also rapidly depletes the population inversion b(t) in the gain medium 10 towards zero as shown in Figure 3(b), whereupon the round-trip loss in the laser cavity exceeds the round-trip gain once again, the photon flux a(t) falls rapidly towards zero as shown in Figure 3(a) and the population density d(t) in the ground state of the saturable absorber 12 returns to the relatively high steady state level which existed prior to the admission of the optical pulse. The dynamics of the photon flux a(t) in the laser cavity 8, the population inversion b(t) in the gain medium 10, and the population density d(t) in the ground state of the saturable absorber 12 described above result in the transmission of a passively Q-switched pulse within the laser cavity 8 and the consequent emission of a passively Q-switched output pulse 30 from the output coupling mirror 6 at a desired precise instant in time. There is no upper time limit or constraint imposed on the emission time of the pulse 30 by the dynamics of the gain provided by the gain medium 10 and/or the dynamics of the loss associated with the saturable absorber 12. In effect, this means that the emission time of the pulse 30 may be more freely selected according to the intended application or use of the laser apparatus.

The laser apparatus 2 and the foregoing method may also be used to control the energy of the output optical pulse 30 emitted from the output coupling mirror 6 from zero up to a maximum output optical pulse energy level. This may be achieved by controlling the magnitude of the continuous direct current 16 supplied from the current driver 18 to the laser diode pump 14 within a range which extends from zero up to the maximum continuous direct current 16 that may be supplied from the current driver 18 to the laser diode pump 14 without free-running passive Q-switching of the laser apparatus 2 occurring. Thus, the foregoing apparatus and method provides for flexibility in the control of the energy of the output optical pulse 30 emitted from the laser apparatus 2. The foregoing apparatus and method may also eliminate the possibility of the emission of additional or secondary output optical pulses from the laser apparatus 2 at variable, undesirable or unpredictable times that may occur during free-running passive Q-switching if the pump rate is too great.

Repeated triggering of the LED current driver 24 for the supply of electrical current pulses to the LED 20, results in the laser apparatus 2 emitting further passively Q-switched optical pulses. This may result in the laser apparatus 2 emitting a train of output optical pulses, wherein each output optical pulse is triggered at a precise instant in time such that the pulse-to-pulse timing jitter is much reduced when compared with the pulse-to-pulse timing jitter associated with pulses emitted from the laser apparatus 2 for free-running passively Q-switched operation. One skilled in the art will appreciate that the train of output optical pulses emitted from the laser apparatus 2 with low pulse-to-pulse timing jitter may be particularly suitable for laser target designator and/or laser range finder applications.

One skilled in the art will appreciate that various modifications of the laser apparatus 2 and the foregoing methods may be made without departing from the scope of the present invention. For example, the materials of the gain medium 10 and the saturable absorber 12 may differ from those described above. Rather than using a laser diode for pumping the gain medium 10, an alternative optical source such as a flashlamp or the like may be used to optically pump the gain medium 10. Alternatively, depending on the material of the gain medium, the gain medium may be electrically pumped by supplying an electrical current thereto. Similarly, rather than using an LED for optically triggering the saturable absorber 12, an alternative optical source such as a laser diode, a flashlamp or the like may be used for optically triggering the saturable absorber 12. Alternatively, depending on the material of the saturable absorber 12, the saturable absorber 12 may be electrically triggered by supplying an electrical electrical current and/or applying an electrical bias thereto.

Rather than operating the laser diode pump current driver 18 to supply a continuous direct electrical current to the laser diode pump 14 for continuous pumping of the gain medium 10 as described above, the laser diode pump current driver 18 may be operated so as to supply a direct electrical current pulse to the laser diode pump 14 for pulsed pumping of the gain medium 10. When pumping the gain medium 10 pulsed in this manner, flexibility in the selection of the emission time of the output optical pulse from the laser apparatus 2 may still be preserved by maintaining the rate of pumping of the gain medium 10 during the supply of the direct electrical current pulse from the laser diode pump current driver 18 to the laser diode pump 14 below that required for free-running passively Q-switched operation. This requires that the magnitude of the current pulse supplied from the laser diode pump current driver 18 to the laser diode pump 14 is maintained below the same level below which free-running passively Q-switched operation of the laser apparatus 2 is prevented when the laser diode pump current driver 18 provides a continuous electrical current to the laser diode pump 14.

While certain embodiments have been described, these embodiments have been presented by way of example only, and are not intended to limit the scope of the invention. Indeed, the novel methods and systems described herein may be embodied in a variety of other forms. Furthermore, various omissions, substitutions and changes in the form of the methods and systems described herein may be made without departing from the spirit of the invention. The accompanying claims and their equivalents are intended to cover such forms or modifications as would fall within the scope and spirit of the invention.

## Claims

1. A method for use in controlling emission of an optical pulse from a laser comprising a gain medium and a saturable absorber, the method comprising:
pumping the gain medium at a rate which is less than a rate of pumping of the gain medium required for passive Q-switching of the laser when no external stimulus is used to bleach the saturable absorber; and
using an external stimulus to bleach the saturable absorber to reduce a laser cavity loss below a laser cavity gain and cause an optical pulse to be emitted from the laser at a desired emission time.

2. A method according to claim 1, comprising limiting the rate of pumping of the gain medium to a maximum rate of pumping of the gain medium which is less than the rate of pumping of the gain medium required for free-running passive Q-switching of the laser regardless of a duration of pumping of the laser gain medium and, optionally, selecting the rate of pumping of the gain medium between zero and the maximum rate of pumping.

3. A method according to any preceding claim, comprising:
selecting the rate of pumping of the gain medium by:
pumping the gain medium continuously when no external stimulus is used to bleach the saturable absorber; and
verifying that an optical output emitted from the laser is substantially time invariant when no external stimulus is used to bleach the saturable absorber.

4. A method according to any preceding claim, comprising using the external stimulus to bleach the saturable absorber repetitively and/or periodically.

5. A method according to any preceding claim, comprising using an optical external stimulus to bleach the saturable absorber and/or using an electrical external stimulus to bleach the saturable absorber.

6. A method according to any preceding claim, comprising at least one of pumping the gain medium for a limited time period, pumping the gain medium repetitively, pumping the gain medium periodically and optically pumping the gain medium.

7. A method according to any preceding claim, comprising directing the optical pulse emitted from the laser at a target.

8. A method according to claim 7, comprising detecting light reflected from the target for the designation of the target and/or for determining a range from the laser to the target.

9. A laser apparatus comprising:
a gain medium;
a saturable absorber;
a pump for pumping the gain medium; and
a trigger source for bleaching the saturable absorber,
wherein the pump has a maximum pump rate which is less than a rate of pumping of the gain medium required for passive Q-switching of the laser apparatus when no external stimulus is used to bleach the saturable absorber, and
wherein the trigger source is configured to provide an external stimulus to bleach the saturable absorber to reduce a laser cavity loss below a laser cavity gain and cause the emission of an optical pulse from the laser apparatus at a desired emission time.

10. A laser apparatus according to claim 9, wherein the gain medium comprises at least one of a solid state material, neodymium-doped yttrium aluminium garnet (Nd: YAG) and a semiconductor material.

11. A laser apparatus according to claim 9 or 10, wherein the pump comprises at least one of an optical source, a laser diode, a flashlamp and a current source.

12. A laser apparatus according to any of claims 9 to 11, wherein the saturable absorber comprises at least one of a solid state material, chromium-doped yttrium aluminium garnet (Cr:YAG) and a semiconductor material.

13. A laser target designator or a laser range finder comprising a laser apparatus as claimed in any of claims 9 to 12.

14. A method for use in configuring a laser comprising a gain medium and a saturable absorber, the method comprising:
pumping the gain medium at a rate above that required for passive Q-switching of the laser when no external stimulus is used to bleach the saturable absorber;
confirming passive Q-switching of the laser when no external stimulus is used to bleach the saturable absorber; and then
reducing the rate of pumping of the gain medium until passive Q-switching of the laser ceases when no external stimulus is used to bleach the saturable absorber.

15. A method according to claim 14, comprising monitoring and/or detecting an optical output from the laser and, optionally, detecting a pulsed temporal variation in the optical output from the laser and, optionally, checking that the detected pulsed temporal variation in the optical output from the laser is consistent with passive Q-switching of the laser when no external stimulus is used to bleach the saturable absorber.
